**Europäisches Patentamt**

**European Patent Office**

**Office européen des brevets**

(19)

(11) Veröffentlichungsnummer: **0 196 411**
**B1**

(12) ## EUROPÄISCHE PATENTSCHRIFT

(45) Veröffentlichungstag der Patentschrift:
31.05.89

(21) Anmeldenummer: 86100856.3

(22) Anmeldetag: 23.01.86

(51) Int. Cl.⁴: **B 62 D 55/112**, F 16 F 9/08,
**B 60 G 11/26**

(54) **Hydropneumatische Federung.**

(30) Priorität: 02.04.85 DE 3512051

(43) Veröffentlichungstag der Anmeldung:
08.10.86 Patentblatt 86/41

(45) Bekanntmachung des Hinweises auf die Patenterteilung:
31.05.89 Patentblatt 89/22

(84) Benannte Vertragsstaaten:
**AT DE FR GB IT SE**

(56) Entgegenhaltungen:
**DE-A-3 420 557**
**US-A-4 194 761**

(73) Patentinhaber: **Ficht GmbH, Spannleitenberg 1,
D-8011 Kirchseeon (DE)**

(72) Erfinder: **Schindler, Manfred, Föhrinring 37, D-8015
Markt Schwaben (DE)**
Erfinder: **Vilsmeier, Walter, Dipl.- Ing.,
Göggenhofen 41, D-8011 Grosshelfendorf (DE)**

(74) Vertreter: **Patentanwälte Dr. Solf & Zapf,
Zeppelinstrasse 53, D-8000 München 80 (DE)**

## Beschreibung

Die Erfindung betrifft eine hydropneumatische Federung gemäß dem Gattungsbegiff des Patentanspruchs 1 oder gemäß dem Gattungsbegriff des Nebenanspruchs 2.

Aus der älteren, nicht vorveröffenlichten Patentschrift WO-A-8 505 605, die nach Art. 158 EPÜ als Veröffentlichung der europäischen Patentanmeldung EP-A-0 182 828 gilt ist eine hydropneumatische Federung mit einem Kreisbogenfederelement bekannt, das sich durch kompakte Außenabmessungen bei großem Federweg und großen aufzunehmenden Kräften auszeichnet. Diese Federung weist die Merkmale des Oberbegriffs der Ansprüche 1 und 2 auf. Die bekannte Federung ist besonders zur Verwendung bei Kettenfahrzeugen wie Panzerfahrzeugen geeignet, wo es auf eine wartungs- und montagefreundliche Unterbringung der Federung auf kleinstem Bauraum ankommt. Die bekannte Federung offenbart jedoch nicht, wie sie in zweckmäßiger Weise zwischen dem Fahrwerksteil und dem Fahrzeugkörper angeordnet werden kann, damit die Forderungen nach Montage- und Wartungsfreundlichkeit und geringstem Einbauraum erfüllt werden.

Der Erfindung liegt die Aufgabe zugrunde, eine hydropneumatische Federung der eingangs genannten Art zu schaffen, die sich durch möglichst geringen Einbauraum und eine hohe Service-Freundlichkeit auszeichnet und mit der der mögliche Federweg und die Federkräfte in einem großen Bereich variierbar sind.

Die gestellte Aufgabe wird erfindungsgemäß auf gleiche Weise entweder mit den im kennzeichnenden Teil des Patentanspruchs 1 angegebenen Merkmalen oder mit den im kennzeichnenden Teil des nebengeordneten Patentanspruchs 2 angegebenen Merkmalen gelöst.

Bei der Ausbildung gemäß Patentanspruch 1 liegen die fahrzeugfesten Anlenkpunkte nahe am Fahrwerkteil, so daß die Federung auf kleinstem Raum unterzubringen ist. Alle aktiven Elemente der Federung befinden sich außerhalb des Fahrzeuges. Selbst bei eng nebeneinander liegenden, jeweils für sich gefederten Fahrwerksteilen läßt sich jeder Fahrwerkteil mit einem verhältnismäßig großen Federweg abstützen. Die Federung jedes Fahrwerkteils ist gut zugänglich, was für die Montage und den raschen Austausch beschädigter oder defekter Elemente günstig ist. Mit der Auslegung des Lenkerparallelogramms, das aus robusten und wenigen Einzelteilen besteht, weil Teile des Kreisbogenfederelementes aktive Teile des Lenkerparallelogramms bilden, läßt sich die Federungscharakteristik und die Höhe der aufzunehmenden Kräfte in einem breiten Bereich variieren.

Bei der Ausbildung gemäß Anspruch 2 wird infolge der Gegenanlenkung mit dem sich zum Schwingenarm hin beugenden Kniegelenk ein Kniehebeleffekt erreicht, der in eingefedertem Zustand mit geringen Federkräften praktisch unendlich große Lasten aufnehmen kann, wobei sich stark progressive Federkennungen ergeben. Trotzdem ist auch der Plazbedarf für diese Ausführungsform der Federung klein. Die geforderte Wartung- und Montagefreundlichkeit ist gegeben. Die Federung besteht aus wenigen Einzelteilen, weil bei dem Kreisbogenfederelement vorhandene Komponenten aktiv an der Federung mitarbeiten. Der erreichbare Federweg ist groß. Es wird eine wünschenswerte Bewegungsuntersetzung beim Einfedern erreicht, was der stark progressiven Federkennung zugute kommt. Auch hier sind Variationen in der Federkennung und den aufzunehmenden Kräften durch die Auslegung der Federung in einem großen Bereich möglich.

Eine weitere, zweckmäßige Ausführungsform geht aus Anspruch 3 hervor. Da das Kreisbogenfederelement in das Kettenlaufrad eingegliedert ist, wird noch weiterer Einbauraum gespart. Dem Kreisbogenfederelement wird zusätzlich die Aufgabe der Drehlagerung des Kettenlaufrades zugewiesen. Ferner ist das Kreisbogenfederelement nach außen hin abgeschirmt im Inneren des Laufrades geborgen.

Eine weitere, alternative Ausführungsform geht aus Anspruch 4 hervor. Hier wird bewußt das Kreisbogenfederelement aus dem Fahrwerkteil bzw. dem Kettenlaufrad heraus verlagert, was gegebenenfalls die Drehlagerung des Kettenlaufrades und die Verbindung des Kreisbogenfederelementes mit den es beaufschlagenden Komponenten der Federung vereinfacht, obwohl der Einbauraum geringfügig größer ist.

Eine weitere, zweckmäßige Ausführungsform, bei der das Kreisbogenfederelement mit einer Gasfeder zusammenarbeitet, geht aus Anspurch 5 hervor. Die entweder im Kettenlaufrad oder im Schwingenarm untergebrachte Gasfeder hat den Vorteil, daß sie nicht im Inneren des Fahrzeuges unterzubringen ist, wo sie gegebenenfalls bei einem Umfall oder bei einem Beschuß eine Gefährdung der Besatzung des Fahrzeuges darstellen könnte.

Eine weitere, vorteilhafte Ausführungsform geht aus Anspruch 6 hervor. Bei diesen Längenabmessungen ergeben sich günstige Hebelübersetzungen und ein großer nutzbarer Federungsweg.

Zweckmäßig sind auch die Maßnahmen gemäß Anspruch 7, weil bei dieser etwas asymmetrischen Konfiguration des Lenkerparallelogramms eine Bewegungsübersetzung zwischen dem Fahrzeug und dem Fahrwerksteil in bezug au die Schwenkbewegung des Widerlagers für das Kreisbogenfederelement erreicht wird.

Eine besonders starke Übersetzung ist auch bei der Ausführungsform gemäß Anspruch 8 erreichbar, wenn die Hebellängen in der angegebenen Weise konzipiert sind.

Schließlich ergibt sich eine besonders stabile Abstützung des Fahrwerkteiles gemäß Anspruch 9, weil über den gesamten Federungsweg die Achse des Fahrwerkteils bzw. der Kreisbogenfeder zwischen den fahrzeugfesten Anlenkpunkten verbleibt.

Anhand der Zeichnungen werden nachstehend Ausführungsformen des Erfindungsgegenstandes erläutert. Es zeigen

Figur 1    einen schematischen Querschnitt durch eine hydropneumatische Federung eines Kettenlaufrades bei einem Panzerfahrzeug,

Figur 2    einen Schnitt in der Ebene II - II von Figur 1,

Figur 3    einen grundsätzlich der Darstellung von Figur 1 entsprechenden Schnitt durch eine weitere Ausführungsform einer hydropneumatischen Federung, in der ausgefederten Stellung,

Figur 4    die Ausführungsform von Figur 3 in der eingefederten Stellung und im Schnitt, und

Figur 5    in schematische Darstellung eine weitere Ausführungsform einer hydropneumatischen Federung.

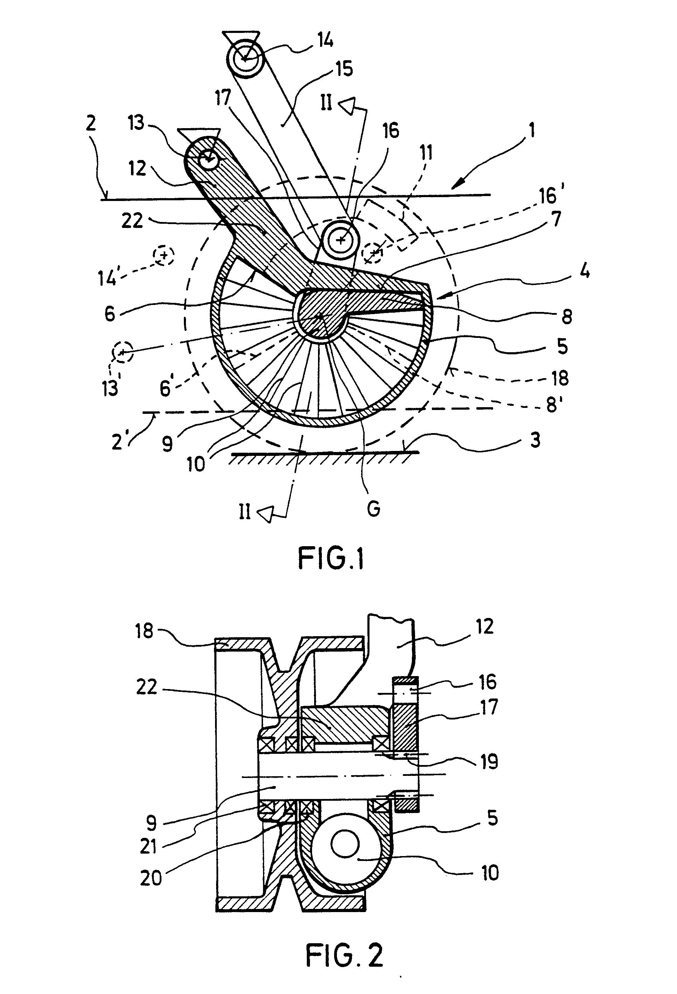

Aus den Figuren 1 und 2 ist eine hydropneumatische Federung 1 erkennbar, wie sie beispielsweise in einem Panzerfahrzeug zur Federung der Kettenlaufräder 18 eingesetzt wird. Als aktives Federelement wird eine Kreisbogenfeder 4 verwendet, wie sie in der Patentschrift WO-A-8 505 605 beschrieben ist. Der detaillierte Aufbau des Kreisbogenfederelementes wird nachstehend nicht erläutert, sondern es wird hiermit nachdrücklich Bezug auf den Inhalt dieser Patentschrift WO-A-8 505 605 genommen, was den Aufbau des Kreisbogenfederelementes betrifft.

Die hydropneumatische Federung 1 dient zum Abfedern einer Panzerwanne 2 gegenüber dem Boden 3, wobei als aktives Element ein Kreisbogenfederelement 4 eingesetzt ist, das ein rundes Gehäuse 5 besitzt, in dem eine radial verlaufende Abstützung 6 sowie eine Anschlagfläche 7 für ein um die Gehäuseachse G drehbares, hebelförmiges Widerlager 8 vorgesehen sind. Das Widerlager 8 ist mit einer um die Gehäuseachse G drehbaren Welle 9 einstückig verbunden. Zwischen dem Widerlager 8 und der Abstützung 6 befindet sich ein aus mehreren Segmenten 10 bestehendes Federelement, das mit einer Hydraulikflüssigkeit gefüllt ist und mit einer Gasfeder 11 zusammenarbeitet, die strichliert angedeutet im Gehäuse 5, außerhalb des Gehäuses 5 oder davon entfernt angebracht ist.

Am Gehäuse 5 ist ein radial abstehender Schwingenarm 12 angeformt, der in einem mit der Panzerwanne 2 fest verbundenen Anlenkpunkt 13 angelenkt ist. An einem zweiten, höher liegenden und zur Gehäuseachse G hin versetzten Anlenkpunkt 14 der Panzerwanne 2 ist ein Parallel-Lenker 15 angelenkt, der über ein Gelenk 16 mit einem Anlenkhebel 17 abknickbar verbunden ist, der seinerseits wiederum mit der Welle 9 im Gehäuse 5 einstückig verbunden ist. Auf der Welle 9 ist (Figur 2) das Laufrad 18 mit Lagern 21 drehbar gelagert. Der Anlenkhebel 17 ist mit der Welle 9 durch eine Keilverzahnung 19 undrehbar verbunden. Das Gehäuse 5 ist mit dem die Abstützung 6 und die Anschlagfläche 7 tragenden Gehäuseteil 22 mit Lagern 20 auf der Welle 9 drehbar gelagert. Der Schwingenarm 12 verläuft von außen seitlich schräg ins Innere des Laufrades zum Gehäuse 5. Die Segmente 10 von Figur 1 und Figur 2 bilden im Gehäuse 5 einen Federbalg.

Die Federung 1 gemäß den Figuren 1 und 2 arbeitet wie folgt:

In Figur 1 ist in ausgezogenen Linien die Unterseite der Panzerwanne 2 in ausgefederter Stellung der Federung erkennbar. Bei einer nach unten gerichteten Kraft an der Panzerwanne 2 verschwenkt der Anlenkpunkt 13 bis in die Stellung 13' nach unten und dreht dabei über den Schwingenarm 12 das Gehäuse 5 entgegen dem Uhrzeugersinn, bis die Abstützung 6 in der Position 6' angelangt ist. Gleichzeitig bewegt sich der Anlenkpunkt 14 aus der in ausgezogenen Linien dargestellten Position in die Stellung 14' und verschwenkt das Gelenk 16 in die Position 16', wodurch das Widerlager 8 in die Position 8' im Uhrzeigersinn verschwenkt wird. Der aus den Segmenten 10 bestehende Federbalg wird zusammengedrückt. Das in ihm enthaltene Hydraulikmedium wird verdrängt und beaufschlagt die Gasfeder 11, die eine Rückstellkraft erzeugt, mit der nach Beendigung der die Panzerwanne nach unten belastenden Kraft die Panzerwanne wieder angehoben wird, bis schließlich die in ausgezogenen Linien gezeigte Stellung wieder erreicht ist. Die Panzerwanne kann dabei bis in die Position 2' absinken.

Die Länge des Parallel-Lenkers 15 ist annähernd gleich der Länge des Schwingenarmes 12 zwischen dem Anlenkpunkt 13 und der Gehäuseachse G. Der Anlenkhebel 17 ist annähernd halb so lang wie der Schwingenarm 12. Wird der Anlenkhebel 17 länger ausgebildet und dafür der Parallel-Lenker 15 verkürzt, so wird die beim Einfedern auftretende Schwenkbewegung des Anlenkhebels 17 im Uhrzeigersinn ein kleineres Bogenmaß haben, so daß die Zusammendrückung des aus den Segmenten 10 bestehenden Federbalges bei gleichem Federweg kleiner und dadurch die Federkennung anders wird. Umgekehrt wird bei weiterer Verkürzung des Anlenkhebels 17 die Zusammendrückung des Federbalges stärker. Auch durch die Abstimmung der Relativlagen zwischen dem Gelenk 16 und den Anlenkpunkten 13 und 14 läßt sich die Federkennung verändern.

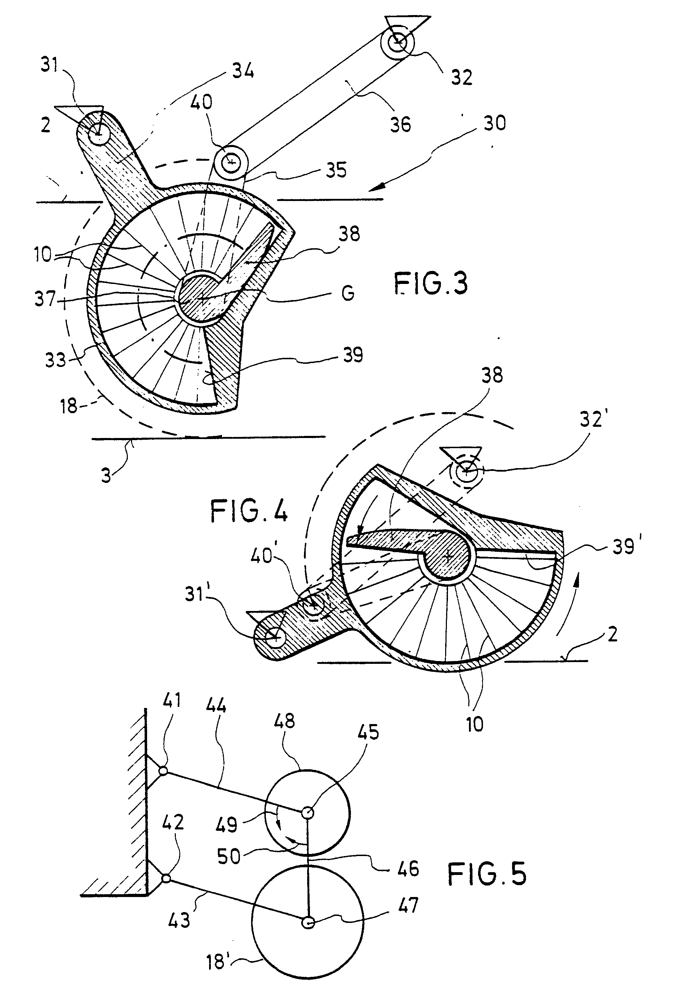

Bei der Ausführungsform geräß den Figuren 3 und 4 ist ein Kreisbogenfederelement 30 mit geringfügig geänderter Auslegung verwendet, das ein Gehäuse 33 mit der Abstützung 39 sowie einem um die Gehäuseachse G mit einer Welle 37 drehbaren Widerlager 38 besetzt. Zwischen dem Widerlager 38 und der Abstützung 39 ist wiederum der aus einzelnen, hydraulisch dicht miteinander verbundenen Segmenten 10 bestehende Federbalg eingeordnet. Am Gehäuse 33 ist ein radialer Schwingenarm 34 angeformt, der in einem Anlenkpunkt 31 der Panzerwanne 2 angelenkt ist. Mit der Welle 37 ist ein Anlenkhebel 35 verbunden, der über ein Gelenk 40 mit einem Drucklenker 36 abknickbar verbunden ist, der seinerseits in einem zweiten Anlenkpunkt 32 der Panzerwanne 2 verschwenkbar ist. Das Kreisbogenfederelement 30 ist wiederum mit dem Kettenlaufrad 18 baulich eingegliedert. In der in Figur 3 gezeigten, ausgefederten Stellung der Federung befindet sich das Gelenk 40 an der dem Schwingenarm 34 zugewandten Seite einer gedachten Verbindungslinie zwischen dem Anlenkpunkt 32 und der Gehäuseachse G. Dies bedeutet, daß beim Einfedern bis in die Stellung von Figur 4 das Gelenk 40 der entgegen dem Uhrzeigersinn verlaufenden Schwenkbewegung des Schwingenarms 40 folgt, so daß auch das Widerlager 38 entgegen dem Uhrzeigersinn bis in die Stellung 38' verschwenkt wird. Auch die Abstützung 39 verschwenkt bis in die Stellung 39'. Dank der Hebelübersetzung zwischen dem Drucklenker 36 und dem Anlenkhebel 35 verläuft jedoch die Schwenkbewegung des Widerlagers 38 über ein größeres Bogenmaß, als die nachgebende Schwenkbewegung der Abstützung 39, so daß der aus den Segmenten 10 bestehende Federbalg zusammengedrückt wird. Allerdings ist bei gleichem Einfederungsweg für die Panzerwanne 2 eine wesentlich kleinere Zusammendrückung des Federbalges gegeben, so daß sich wiederum eine andere Federkennung ergibt und durch den Kniehebeleffekt mit geringen Federkräften sehr hohe Lasten aufgenommen werden können, wobei allerdings die Federkennung außerordentlich progressiv wird. Es liegt auf der Hand, daß durch die Veränderung der Hebelverhältnisse die Veränderung der Relativlagen zwischen den Anlenkpunkten und dem Gelenk 40 und der Gehäuseachse G die Federkennung und das Verhalten der Federung in einem weiten Bereich verändert werden kann. In der eingefederten Stellung der Federung haben die Anlenkpunkte 31 und 32 die Stellungen 31' und 32'·erreicht. Das Gelenk 40 steht in der Position 40' und die Panzerwanne 2 ist in der unteren Position 2' angelangt.

Bei einer weiteren Ausführungsform gemäß Figur 5 ist ein Kreisbogenfederelement 48 mit seinem Gehäuse getrennt vom Kettenlaufrad 18' in einem Gelenk 45 des Lenkerparallelogramms angeordnet, das aus einem an der Panzerwanne in einem obenliegenden Anlenkpunkt 41 angelenkt den Schwingenarm 44, einem zwischen einer Gehäuseachse 45 des Kreisbogenfederelementes 48 und einem Gelenk 47, das gleichzeitig die Drehachse des Kettenlaufrades 18 ist, angeordneten Anlenkhebel 46, einem das Gelenk 47 mit einem tiefer liegenden Anlenkpunkt 42 an der Panzerwanne 2 verbindenden Parallel-Lenker 43 und schließlich dem zwischen den Anlenkpunkten 41 und 42 vorliegenden Abschnitt der Panzerwanne 2 besteht. Beim Einfedern verschwenken der Schwingenarm 44 und der Anlenkhebel 46 um die Gehäuseachse 45 in Richtung der Pfeile 49 und 50 zueinander, welche Bewegung zum Zusammendrücken des nicht hervorgehobenen Federbalges nutzbar ist. Es wird zwar für diese Lösung geringfügig mehr Einbauraum benötigt. Jedoch ist die Drehlagerung des Kettenlaufrades 18' und die Anbringung des Kreisbogenfederelementes 48 einfacher als bei den vorhergehenden Lösungen. Zudem kann wiederum durch die Variation der Hebelverhältnisse und die Relativlagen der Anlenkpunkte und Gelenke eine bewußte Variation der Federkennung bzw. des Federverhaltens erreicht werden.

**Patentansprüche**

1. Hydropneumatische Federung eines Fahrwerkteils, insbesondere bei einem Kettenfahrzeug wie einem Panzerfahrzeug, mit einem in einem runden Gehäuse (5, 33) angeordneten, mit dem Fahrwerksteil verbundenen Kreisbogenfederelement, (4, 30) das im Gehäuse zwischen einer gehäusefesten Abstützung (6, 39) und einem um die Gehäuseachse drehbaren Widerlager angeordnet ist, wobei das Gehäuse über einen gehäusefesten Schwingenarm (12, 34) und das Widerlager über einen Anlenkhebel (17, 46) an Anlenkpunkten (13, 14; 41, 42) angelenkt sind, dadurch gekennzeichnet, daß der Schwingenarm (12, 44) und der Anlenkhebel (17, 46) zusammen mit den fahrzeugfest angeordneten Anlenkpunkten (13, 14; 41, 42) und einem den Anlenkhebel (17, 46) mit dem einen (14, 42) der Anlenkpunkte verbindenden Parallel-Lenker (15, 43) ein Lenkerparallelogramm bilden, und das in der ausgefederten Stellung das Gelenk (16, 47) zwischen dem Parallel-Lenker (15, 43) und dem Anlenkhebel (17, 46) an der dem Schwingenarm (12, 44) abgewandten Seite einer gedachten Verbindungslinie zwischen dem Anlenkpunkt (14, 41) für den Parallel-Lenker (15) und der Gehäuseachse (G, 45) liegt.

2. Hydropneumatische Federung eines Fahrwerkteils, insbesondere bei einem Kettenfahrzeug wie einem Panzerfahrzeug, mit einem in einem runden Gehäuse (33) angeordneten, mit dem Fahrwerkteil verbundenen Kreisbogenfederelement (30), das im Gehäuse zwischen einer gehäusefesten Abstützung (33) und einem um die Gehäuseachse drehbaren Widerlager (38) angeordnet ist, wobei das Gehäuse über einen gehäusefesten Schwingenarm (34) und das Widerlager über einen Anlenkhebel (35) an Anlenkpunkten (31, 32) angelenkt sind, dadurch gekennzeichnet, daß der Schwingenarm (34) an einem tiefer liegenden fahrzeugfesten Anlenkpunkt (31) angelenkt ist, daß ein einen höher liegenden (32) fahrzeugfesten Anlenkpunkt mit dem Anlenkhebel (35) verbindender Drucklenker (36) vorgesehen ist, und daß in der ausgefederten Stellung das Gelenk (40) zwischen dem Drucklenker (36) und dem Anlenkhebel (35) an der dem Schwingenarm (34) zugewanden Seite einer gedachten Verbindungslinie zwischen dem höher liegenden Anlenkpunkt (32) und der Gehäuseachse (G) liegt.

3. Hydropneumatische Federung nach Anspruch 1 oder 2, wobei der Fahrwerksteil ein Kettenlaufrad ist, dadurch gekennzeichnet, daß das Gehäuse (5, 33) des Kreisbogenfederelements (4) ins Innere des Kettenlaufrades (18) eingegliedert ist und daß das Kettenlaufrad (18) auf der Gehäuseachse (G), vorzugsweise auf einer Verbindungswelle (37) zwischen dem Anlenkhebel (17, 35) und dem Widerlager (8, 38), drehbar gelagert ist.

4. Hydropneumatische Federung nach Anspruch 1, dadurch gekennzeichnet, daß der Fahrwerksteil bzw. das Kettenlaufrad (18') im Gelenk (47) zwischen dem Anlenkhebel (46) und dem Parallel-Lenker (43) vom Gehäuse (48) des Kreisbogenfederelements getrennt drehbar gelagert ist.

5. Hydropneumatische Federung nach wenigstens einem der Ansprüche 1 bis 4, wobei das Kreisbogenfederelement mit einer Gasfeder verbunden ist, dadurch gekennzeichnet, daß die Gasfeder (11) im Kettenlaufrad (18) oder im Schwingenarm (12) untergebracht ist.

6. Hydropneumatische Federung nach den Ansprüchen 1 und 4, dadurch gekennzeichnet, daß der Parallel-Lenker (15) mindestens die gleiche Länge besitzt wie der Schwingenarm (12) zwischen dem Anlenkpunkt (13) und der Gehäuseachse (G), und daß die Länge des Anlenkhebels (17) höchstens die Hälfte der Länge des Schwingenarms (12) beträgt.

7. Hydropneumatische Federung nach den Ansprüchen 1 und 6, dadurch gekennzeichnet, daß der in Hochrichtung gemessene Abstand zwischen den Anlenkpunkten (13, 14) geringfügig größer ist als die Länge des Anlenkhebels (17).

8. Hydropneumatische Federung nach Anspruch 2, dadurch gekennzeichnet, daß der Anlenkhebel (35) annähernd gleich lang ist wie der Drucklenker (36).

9. Hydropneumatische Federung nach den Ansprüchen 2 und 8, dadurch gekennzeichnet, daß - in Einfederungsrichtung gesehen - die Gehäuseachse (G) zwischen den Anlenkpunkten (31, 32) liegt.

## Claims

1. Hydropneumatic suspension of a chassis part, particularly in a track-laying vehicle such as an armoured vehicle, having an arcuate spring element (4, 30) arranged in a circular housing (5, 33) and connected to the chassis part and arranged in the housing between a bracing means (6, 39) fixed to the housing and an abutment (8, 38) rotatable about the housing axis, the housing, through a rocker arm (12, 34) fixed to the housing, and the abutment, (17, 46), through an articulating lever (17, 48), being articulated to articulation points (13, 14; 41, 42), characterized in that the rocker arm (12, 44) and the articulating lever (17, 46) form a parallelogram linkage together with the articulation points (13, 14; 41, 42) arranged fixed to the vehicle and with a parallel guide rod (15, 43) which connects the articulating lever (17, 46) to the one (14, 42) of the articulation points, and that in the expanded spring position the articulation (16, 47) between the parallel guide rod (15, 43) and the articulating lever (17, 46) is located on the side remote from the rocker arm (12, 44) of an imaginary line joining the articulation point (14, 41) for the parallel guide rod (15) to the housing axis (G, 45).

2. Hydropneumatic suspension of a chassis part, particularly in a track-laying vehicle such as an armoured vehicle, having an arcuate spring element (30) arranged in a circular housing (33) and connected to the chassis part, which is arranged in the housing between a bracing means (39) fixed to the housing and an abutment (38) rotatably about the housing axis, the housing, through a rocker arm (34) fixed to the housing, and the abutment, through an articulating lever (35), being articulated to articulation points (31, 32), characterized in that the rocker arm (34) is articulated to a lower placed articulation point (31) fixed to the vehicle, that a thrust rod (36) connecting a higher placed (32) articulation point fixed to the vehicle to the articulating lever (35) is provided, and that in the expanded spring position the articulation (40) between the thrust rod (36) and the articulating lever (35) is located on the side facing the rocker arm (34) of an imaginary line joining the higher placed articulation point (32) to the housing axis (G).

3. Hydropneumatic suspension according to Claim 1 or 2, the chassis part being a bogie wheel, characterized in that the housing (5, 33) of the arcuate spring element (4) is incorporated into the interior of the bogie wheel (18), and that the bogie wheel (18) is mounted rotatably on the housing axis (6), preferably on a connecting shaft (37) between the articulating lever (17, 35) and the abutment (8, 38).

4. Hydropneumatic suspension according to Claim 1, characterized in that the chassis part or the bogie wheel (18') is mounted in the articulation (47) between the articulating lever (46) and the parallel guide rod (43), for rotation separately from the housing (48) of the arcuate spring element.

5. Hydropneumatic suspension according to at least one of Claims 1 to 4, the arcuate spring element being connected to a pneumatic spring, characterized in that the pneumatic spring (11) is housed in the bogie wheel (18) or in the rocker arm (12).

6. Hydropneumatic suspension according to Claims 1 and 4, characterized in that the parallel guide rod (15) is at least of equal length to the rocker arm (12) between the articulation point (13) and the housing axis (G), and that the length of the articulating lever (17) is not more than half the length of the rocker arm (12).

7. Hydropneumatic suspension according to Claims 1 and 6, characterized in that the interval, measured in the vertical direction, between the articulation points (13, 14) is slightly greater than the length of the articulating lever (17).

8. Hydropneumatic suspension according to Claim 2, characterized in that the articulating lever (35) is of approximately equal length to the thrust rod (36).

9. Hydropneumatic suspension according to Claims 2 and 8, characterized in that the housing axis (G) is located between the articulation points (31, 32) considered in the spring contraction direction.

**Revendications**

1. Suspension hydro-pneumatique d'une portion de mécanisme de roulement, en particulier d'un véhicule entraîné par chaînes, tel que véhicule blindé, comprenant un élément à rèssort en arc de cercle (4, 30) disposé dans un boîtier circulaire (5, 33) relié à la portion de mécanisme de roulement et situé dans le boîtier entre un support (6, 39) solidaire du boîtier et une butée (8, 38) pivotable autour de l'axe du boîtier, le boîtier étant articulé en divers points d'articulation (13, 14; 41, 42) par un bras oscillant (12, 34) solidaire du boîtier et par la butée à l'aide d'un levier articulé (17, 46),
   caractérisée en ce que le bras oscillant (12, 44) et le levier articulé (17, 46) constituent, ensemble avec les points d'articulation (13, 14; 41, 42) solidaires du véhicule et un guide parallèle (11, 43) reliant le levier articulé (17, 46) à l'un des points d'articulation (14, 42), un parallélogramme de guidage et en ce que, dans la position relâchée du ressort, l'articulation (16, 47) entre le guide parallèle (15, 43) et le levier articulé (17, 46) est située sur le côté opposé au bras oscillant (12, 44) d'une ligne de connexion imaginaire entre le point d'articulation (14, 41) du guide parallèle (15) et l'axe (G, 45) du boîtier.

2. Suspension hydro-pneumatique d'une portion de mécanisme de roulement, en particulier d'un véhicule entraîné par chaînes, tel que véhicule blindé, comprenant un élément à ressort en arc de cercle (30) disposé dans un boîtier rond (33) relié à la portion de mécanisme de roulement et situé dans le boîtier entre un support solidaire du boîtier (39) et une butée (38) pivotable autour de l'axe du boîtier, le boîtier étant articulé en des points d'articulation (31, 32) par un bras oscillant (34) solidaire du boîtier et la butée à l'aide d'un levier articulé (35),
   caractérisé en ce que le bras oscillant (34) est articulé en un point d'articulation (31) situé en bas et solidaire du véhicule, qu'une flèche comprimée (36) reliant un point d'articulation (32) situé en haut et solidaire du véhicule au levier articulé (35) est prévue et qu'en position relâchée du ressort, l'articulation (40) est située entre la flèche comprimée (36) et le levier articulé (35), sur le côté opposé au bras oscillant (34) d'une ligne de connexion imaginaire entre le point d'articulation du haut (32) et l'axe (G) du boîtier.

3. Suspension hydro-pneumatique selon la revendication 1 ou 2, dans laquelle la portion de mécanisme de roulement est une roue mobile à chaîne,
   caractérisée en ce que le boîtier (5, 33) de l'élément à ressort en arc de cercle (4) est inséré à l'intérieur de la roue mobile à chaîne (18) et que la roue mobile à chaîne (18) est montée rotative sur l'axe (G) du boîtier, de préférence sur un arbre de liaison (37) entre le levier articulé (17, 35) et la butée (8, 38).

4. Suspension hydro-pneumatique selon la revendication 1,
   caractérisée en ce que la portion de mécanisme à roulement ou la roue mobile à chaîne (18') est montée rotative dans l'articulation (47) entre le levier articulé (46) et le guide parallèle (43) séparé du boîtier (48) de l'élément à ressort en arc de cercle.

5. Suspension hydro-pneumatique selon au moins l'une des revendications 1 à 4, dans laquelle l'élément à ressort en arc de cercle est relié à un ressort pneumatique,
   caractérisée en ce que le ressort pneumatique (11) est logé dans la roue mobile à chaîne (18) ou dans le bras oscillant (12).

6. Suspension hydro-pneumatique selon les revendications 1 à 4,
   caractérisé en ce que le guide parallèle (15) a au moins la même longueur que le bras oscillant (12) entre le point d'articulation (13) et l'axe (G) du boîtier et que la longueur du levier articulé (17) est tout au plus égale à la moitié de celle du bras oscillant (12).

7. Suspension hydro-pneumatique selon les revendications 1 et 6,
   caractérisée en ce que l'écart mesuré en hauteur entre les points d'articulation (13, 14) est légèrement supérieur à la longueur du levier articulé (17).

8. Suspension hydro-pneumatique selon la revendication 2,
   caractérisée en ce que le levier articulé (35) a sensiblement la même longueur que la flèche comprimée (36).

9. Suspension hydro-pneumatique selon les revendications 2 et 8,
   caractérisée en ce que - vu dans la direction de compression du ressort - l'axe (G) du boîtier est situé entre les points d'articulation (31, 32).

FIG.1

FIG. 2

1

FIG.3

FIG.4

FIG.5